# EUROPÄISCHE PATENTANMELDUNG

(11) **EP 2 995 229 A1**
(43) Veröffentlichungstag der Anmeldung: **16.03.2016**
(21) Anmeldenummer: 15176490.9
(22) Anmeldetag: 13.07.2015
(51) Int. Cl.: A47J 37/06

(54) **GRILLROST**

(30) Priorität: 15.09.2014 DE 202014104354 U
(71) Anmelder: Vögele, Rainer, 87719 Mindelheim (DE)
(72) Erfinder: Vögele, Rainer, 87719 Mindelheim (DE)
(74) Vertreter: Charrier, Rapp & Liebau

(57) **Zusammenfassung**

Die Erfindung betrifft einen Grillrost mit einem aus einem formstabilen Metallprofil bestehenden Auflageteil (1), das mehrere voneinander beabstandete Auflagebereiche (4) mit einer Auflagefläche (5) für das Grillgut, mehrere voneinander beabstandete Auffangbereiche (6) für abtropfende Flüssigkeit und unter einem Winkel zu den Auflageflächen (5) verlaufende, voneinander beabstandete Verbindungsstege (8) zwischen den Auflagebereichen (4) und den Auffangbereichen (6) enthält. Um ein Abtropfen von Flüssigkeiten in das Feuer oder die Glut zu vermeiden, ist in den Verbindungsstegen (8) mindestens ein durch benachbarte Verbindungsstege (8) durchgängig verlaufender Durchlass (11) angeordnet.

## Beschreibung

Die Erfindung betrifft einen Grillrost nach dem Oberbegriff des Anspruchs 1.

Ein derartiger Grillrost ist aus der WO 2009/094416 A1 bekannt. Der dort offenbarte Grillrost enthält ein aus einem Metallprofil bestehendes Auflageteil, das eine Grundplatte und mehrere von der Grundplatte vorstehende und voneinander beabstandete Auflagestege mit einer oberen Auflagefläche für das Grillgut aufweist. Zwischen den Auflagestegen und der Grundpatte werden rinnenförmige Auffangbereiche für abtropfende Flüssigkeit gebildet. In den zwischen den Auflagestegen angeordneten Bereichen der Grundplatte sind Löcher angeordnet, durch die das Grillgas zu dem Grillgut gelangen und so für das typische Grillaroma sorgen kann. Allerdings kann durch diese Löcher auch das von dem Grillgut abtropfende Fett in das Feuer oder die Glut gelangen, was zu einer unerwünschten Rauchentwicklung oder Russbildung führen kann.

Aufgabe der Erfindung ist es, einen Grillrost der eingangs genannten Art zu schaffen, bei dem ein gutes Umströmen des Grillgutes durch das Grillgas ermöglicht und dennoch ein Abtropfen von Flüssigkeiten in das Feuer oder die Glut vermieden werden kann.

Diese Aufgabe wird durch einen Grillrost mit den Merkmalen des Anspruchs 1 gelöst. Zweckmäßige Weiterbildungen und vorteilhafte Ausführungsformen der Erfindung sind Gegenstand der Unteransprüche.

Der erfindungsgemäße Grillrost enthält ein aus einem formstabilen Metallprofil bestehendes Auflageteil, das mehrere voneinander beabstandete obere Auflagebereiche mit einer oberen Auflagefläche für das Grillgut, mehrere voneinander beabstandete untere Auffangbereiche für abtropfende Flüssigkeit und unter einem Winkel zu den oberen Auflageflächen verlaufende, voneinander beabstandete Verbindungsstege zwischen den Auflagebereichen und den Auffangbereichen enthält. In den Verbindungsstegen ist mindestens ein durch benachbarte Verbindungsstege durchgängig verlaufender Durchlass angeordnet. Durch den mindestens einen Durchlass in den Verbindungsstegen wird erreicht dass der Grillrost einen Durchgang für das zur Erzeugung des typischen Grillaromas erforderliche Grillgas enthält und dennoch kein Fett direkt in die Kohle tropfen kann. Das abtropfende Fett kann in den Auffangbereichen des Grillrosts gesammelt werden, während das Grillgas das Grillgut umströmen kann.

In vorteilhafter Weise kann der mindestens eine Durchlass durch miteinander fluchtende Löcher in benachbarten Verbindungsstegen gebildet sein. Dadurch ist der Durchlass z.B. mit Hilfe eines Fräsers einfach herstellbar. Die miteinander fluchtenden Löcher können mit Hilfe eines Fräsers mit geringem Bearbeitungsaufwand in die Verbindungsstege eingefräst sein. Die Löcher können aber auch z.B. in eine aus Stahl bestehende Platte eingestanzt werden, die anschließend dann entsprechend umgeformt wird.

Vorzugsweise sind in den Verbindungsstegen mehrere voneinander beabstandete Durchgänge vorgesehen. Dadurch kann eine besonders gute Durchströmung ermöglicht werden.

Gemäß einer besonders vorteilhaften Ausführung sind die Verbindungsstege mit den dadurch verlaufenden Durchlässen rechtwinklig zu den Auflageflächen für das Grillgut ausgerichtet. Dadurch kann auf besonders effektive Weise vermieden werden, dass eine abtropfende Flüssigkeit in das Feuer oder die Glut gelangt. Die Verbindungsstege können aber auch nach innen oder leicht nach außen geneigt sein.

Das Auflageteil kann zweckmäßigerweise wellenförmig ausgebildet sein. Dadurch kann das Auflageteil bei gleichbeliebender Funktionsweise einfach umgedreht werden. An der Ober- und Unterseite des Auflageteils können unterschiedlich ausgestaltete Auflageflächen vorgesehen sein. Dadurch ist der Grillrost vielseitiger verwendbar. Das Auflageteil kann einteilig ausgeführt oder aus mehreren Abschnitten zusammengesetzt sein. In einer mehrteiligen Ausführung kann das Auflageteil einfach an die unterschiedlichen Grillgrößen angepasst werden.

Zur lösbaren Verbindung der Abschnitte können an den freien Enden der beiden äußeren Verbindungsstege eines Abschnitts miteinander korrespondierende Verbindungselemente angeordnet sein. Das eine Verbindungselement kann z.B. als nach oben vorstehender Verbindungssteg mit einem im Querschnitt runden Außenprofil und das andere Verbindungselement als nach unten offene Aufnahmenut mit einer an den Querschnitt des ersten Verbindungselements angepassten runden Innenkontur ausgebildet sein.

Das Auflageteil kann zweckmäßigerweise auf zwei zueinander parallelen Seitenprofilen und als Rinnen- oder Ablaufprofile ausgebildeten Seitenprofilen angeordnet sein.

In einer besonders zweckmäßigen Ausführung ist an einer oberen Fläche der den Durchlass bildenden Löcher eine Abtropfkante angeordnet, die gegenüber einer Innenkante an einer unteren Fläche der Löcher um einen Versatz y nach außen versetzt ist. Dadurch kann sichergestellt werden, dass die antropfende Flüssigkeit nicht durch die Löcher nach innen, sondern nach außen zu oberen Auffangflächen der Auffangbereiche gelangt.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Grillrost mit einem Auflageteil und Seitenteilen in einer Draufsicht;
- **Figur 2**: den Verbindungsbereich zwischen dem Auflageteil und einem Seitenteil des in Figur 1 gezeigten Grillrosts in einer Seitenansicht;
- **Figur 3**: einen Teil zweier miteinander verbundener Abschnitte eines Auflageteils in einer Seitenansicht;
- **Figur 4**: einen Abschnitt des Auflageteils von Figur 2 in einer eine Schnittansicht entlang der Linie A-A;
- **Figur 5**: einen Abschnitt des Auflageteils von Figur 2 in einer eine Schnittansicht entlang der Linie B-B;
- **Figur 6**: das Auflageteil mit zwei Werkzeugen zur Herstellung der Durchlässe und
- **Figur 7**: einen Ablauf bei der Verbindung zweier Abschnitte des in Figur 3 gezeigten Auflageteils;
- **Figur 8**: eine vergrößerte Teilansicht des Auflageteils von Figur 3;
- **Figur 9**: eine vergrößerte Teilansicht eines weiteren Auflageteils;
- **Figur 10**: eine Schnittansicht des Auflageteils von Figur 9 und
- **Figur 11**: eine Schnittansicht eines weiteren Auflageteils.

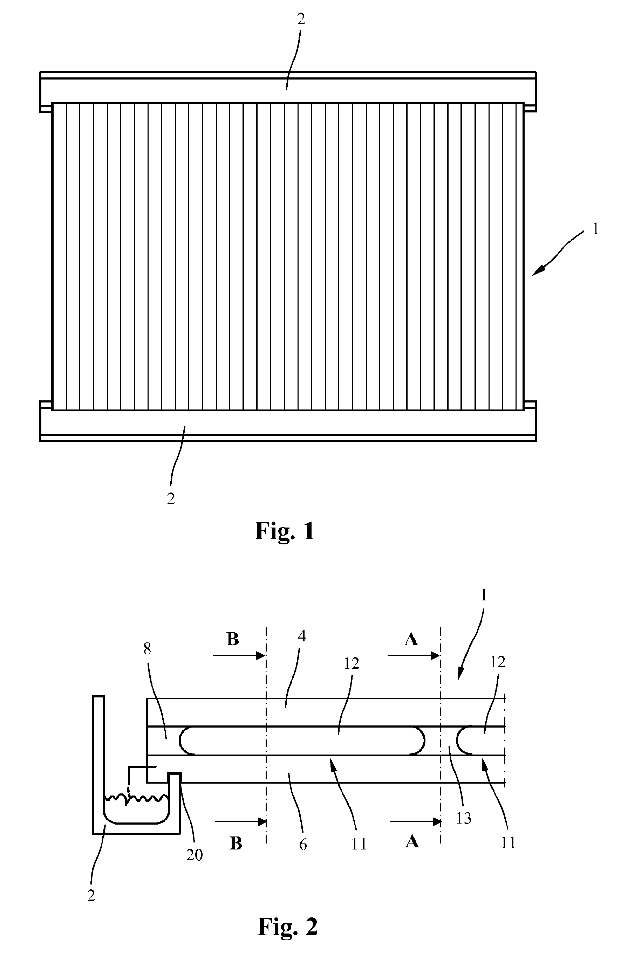

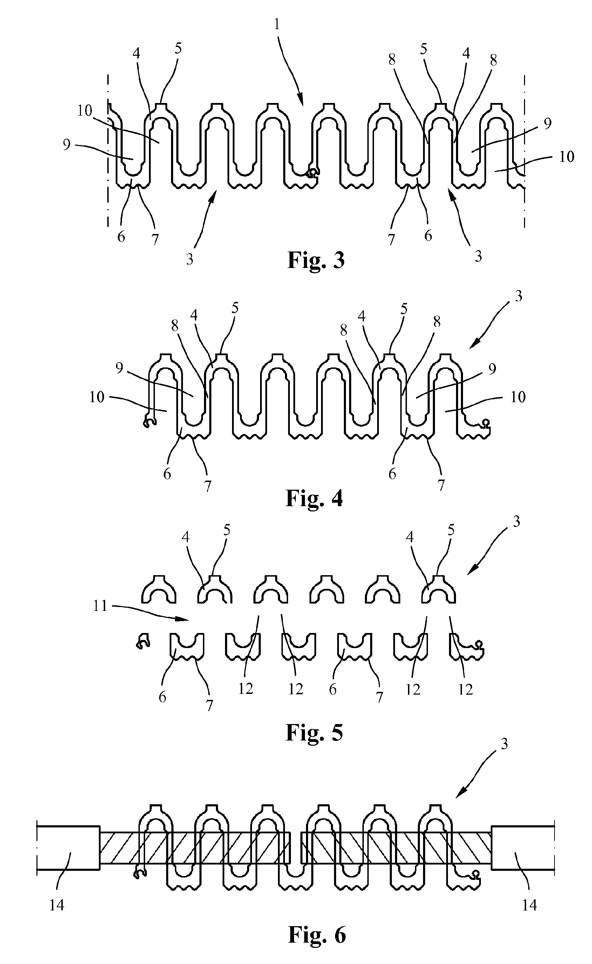

In der Figur 1 ist ein Grillrost mit einem Auflageteil 1 und zwei zueinander parallelen Seitenteilen 2 in einer Draufsicht gezeigt. Das in Figur 2 in einer Seitenansicht dargestellte Auflageteil 1 ist bei der gezeigten Ausführung gemäß Figur 3 aus mehreren miteinander verbindbaren und in Figur 4 gesondert dargestellten Abschnitten 3 zusammengesetzt. Die einzelnen Abschnitte 3 sind aus einem formstabilen und nicht ohne weiteres verformbaren Metallprofil hergestellt. Sie können z.B. aus einem stranggepressten Aluminiumprofil oder aus einem gewalzten Stahlprofil hergestellt und mit einer Beschichtung versehen sein. Das Auflageteil 1 kann aber auch einteilig ausgeführt sein.

Wie aus Figur 3 hervorgeht, weist das hier aus mehreren Abschnitten 3 zusammengesetzte Auflageteil 1 mehrere voneinander beabstandete Auflagebereiche 4 mit einer ersten Auflagefläche 5, mehrere voneinander beabstandete Auffangbereiche 6 mit einer zweiten Auflagefläche 7 und rechtwinklig zu den Auflageflächen 5 und 7 verlaufende Verbindungsstege 8 auf. Das gezeigte Auflageteil 1 ist wellenförmig ausgebildet, wobei zwischen den eine Dicke von mindestens 1 mm aufweisenden Verbindungsstegen 8 abwechselnd nach oben oder unten offene Zwischenräume 9 und 10 vorhanden sind. Dadurch kann das Auflageteil 1 einfach umgedreht und von beiden Seiten genutzt werden. Während bei der in Figur 3 gezeigten Stellung die hier oben liegenden und nach unten gewölbten Auflagebereiche 4 zur Auflage des Grillguts und die zwischen den Auflagebereichen 4 liegenden, unten geschlossenen Zwischenräume 9 zum Sammeln abtropfender Flüssigkeit dienen, kann das Grillgut beim Umdrehen des Auflageteils 1 auf die zweite Auflagefläche 7 aufgelegt werden, während abtropfende Flüssigkeit in den Zwischenräumen 10 aufgefangen werden kann. Die ersten und zweiten Auflageflächen 5 bzw. 7 können unterschiedlich ausgestaltet sein. Bei der gezeigten Ausführung sind die ersten Auflageflächen 5 z.B. relativ schmal ausgebildet, während die zweiten Auflageflächen 7 breiter und an der Außenseite mit einer rillenförmigen Profilierung versehen sind.

In den Verbindungsstegen 8 sind in Figur 2 und in Figur 5 erkennbare Durchlässe 11 angeordnet. Die Durchlässe 11 verlaufen durch alle Verbindungstege 8 hindurch und bilden einen ununterbrochenen Durchgang, der parallel zu den oberen und unteren Auflageflächen 5 und 7 verläuft. Durch die Durchlässe 11 kann das Grillgas zu dem Grillgut gelangen, wodurch das typische Grillaroma wie bei einem herkömmlichen, geöffneten Grillrost ermöglicht wird. Durch die Anordnung der Durchlässe 11 in den zu den Auflageflächen 5 und 5 rechtwinkligen Verbindungsstegen 8 wird sichergestellt, dass kein Fett direkt in die Kohle tropfen kann und es so nicht zu einer unerwünschten Rauchbildung bzw. zur Entstehung von krebserregenden Stoffen kommt. Bei der gezeigten Ausführung werden die Durchlässe 11 durch hier als Langlöcher ausgeführte Löcher 12 gebildet, die miteinander fluchtend durch benachbarte Verbindungsstege 8 verlaufen. Bei dem in der Zeichnung dargestellten Ausführungsbeispiel sind mehrere zueinander parallele Durchlässe 11 vorgesehen. Die Löcher 12 sind derart angeordnet, dass die Auflagebereiche 4 und die Auffangbereiche 6 des Auflageteils 1 nur durch dünne Stege 13 miteinander verbunden sind. Dadurch ist der Grillrost in der vertikalen Richtung großflächig geöffnet und das für ein gutes Grillaroma verantwortliche Grillgas kann besonders gut zu dem Grillgut gelangen.

Die Herstellung der Durchlässe 11 kann auf besonders zweckmäßige Weise durch in Figur 6 schematisch dargestellte Fräser 14 erfolgen, die parallel zu den oberen und unteren Auflageflächen 5 und 7 der einzelnen Abschnitte 3 des Auflageteils 1 ausgerichtet werden und durch axiale Verschiebung zunächst in die Verbindungsstege 8 eintauchen und dann durch entsprechende Verfahrbewegung in einer dazu senkrechten Ebene die als Langlöcher ausgebildeten Löcher 12 erzeugen können. Die Herstellung der Löcher 12 kann durch einen oder zwei Fräser 14 von einer oder beiden Seiten erfolgen.

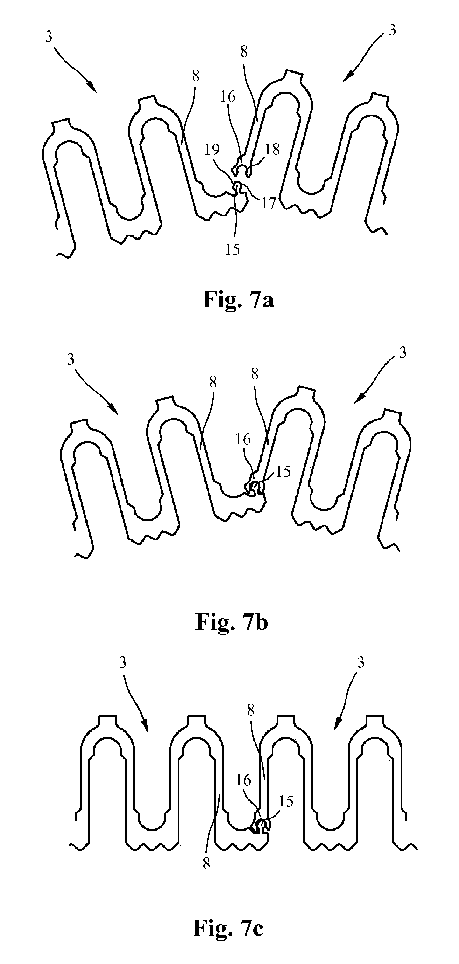

Zur lösbaren Verbindung der einzelnen Abschnitte 3 des Auflageteils 1 sind an den freien Enden der beiden äußeren Verbindungsstege 8 jedes Abschnitts 3 zueinander korrespondierende Verbindungselemente 15 und 16 vorgesehen. Aus Figur 7 ist besonders gut ersichtlich, dass das eine Verbindungselement 15 als nach oben vorstehender Verbindungssteg mit einem im Querschnitt runden Außenprofil 17 und das andere Verbindungselement 16 als nach unten offene Aufnahmenut mit einer an den Querschnitt des ersten Verbindungselements angepassten runden Innenkontur 18 ausgebildet ist. An dem Außenprofil 17 des Verbindungselements 15 ist eine Abschrägung 19 vorgesehen. Wie aus den Figuren 7a und 7b hervorgeht, können dadurch die Abschnitte 3 in einer gekippten Stellung zusammengesteckt werden, während die Abschnitte 3 in der in Figur 7 gezeigten Gebrauchsstellung fest miteinander verbunden sind.

Aus Figur 2 ist ersichtlich, dass das Auflageteil 1 über Nuten 20 auf die beiden als Rinnenprofile ausgeführten Seitenteile 2 aufgesetzt werden kann. In den Seitenteilen 2 kann somit die auf die Auffangbereiche 6 tropfende Flüssigkeit gesammelt werden. Die als Ablauf- oder Rinnenprofile ausgeführten Seitenteile 2 können seitlich flüssigkeitsdicht geschlossen sein, so dass z.B. Wasser oder eine andere Flüssigkeit eingebracht werden kann. In diese Flüssigkeit kann dann das Fett tropfen und wird nicht verbrannt. Zum anderen können die Seitenteile 2 als Behälter für Wasser oder alkoholische Flüssigkeiten dienen, die besonders beim indirekten Grillen mit Abdeckungen verdampfen und für einen zusätzlichen Aroma- und Gareffekt sorgen können.

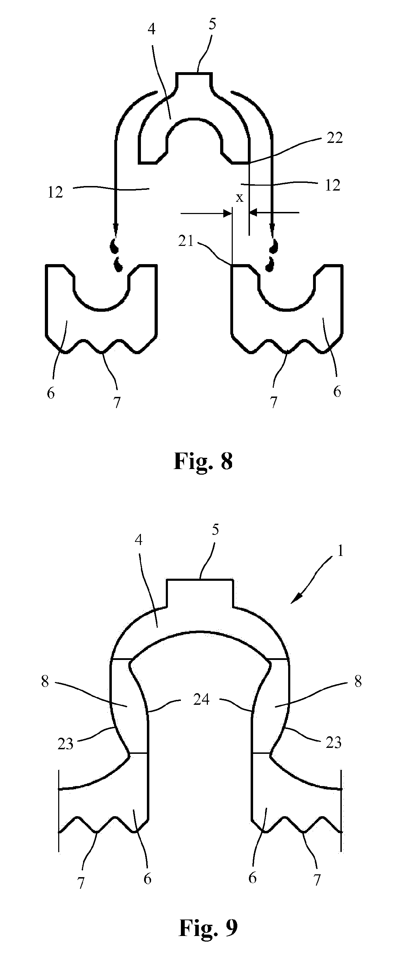

In Figur 8 ist erkennbar, dass die Innenkante 21 des unteren Auffangbereichs 6 gegenüber der Außenkante 22 des oberen Auflagebereichs 4 um einen Versatz x von mindestens 1 mm nach innen versetzt ist. Dadurch kann besonders gut gewährleistet werden, dass nach unten tropfende Flüssigkeit nicht durch die Löcher 12 gelangt.

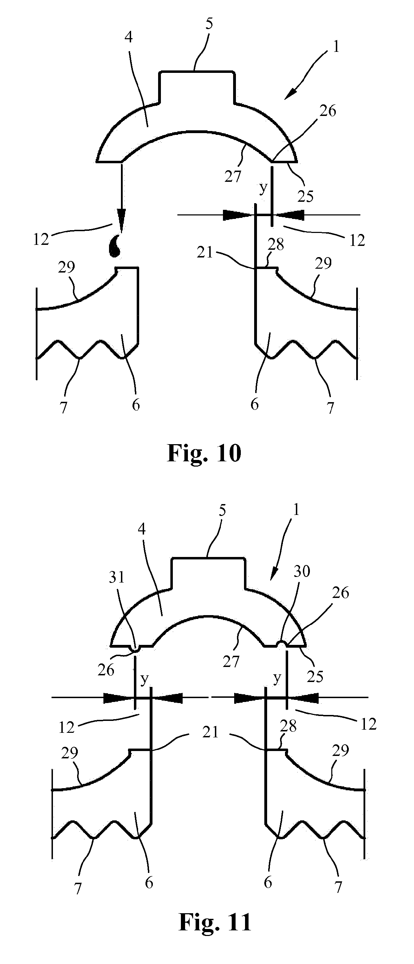

In Figur 9 ist ein weiteres Ausführungsbeispiel eines Auflageteils 1 gezeigt. Bei dieser Ausführung sind die beiden von dem oberen Auflagebereich 4 zum unteren Auffangbereich 6 nach unten verlaufenden Verbindungsstege 8 nicht gerade, sondern nach unten hin zusammenlaufend und mit nach außen bzw. innen gebogenen Außen- bzw. Innenflächen 23 und 24 ausgeführt. Auch bei dieser Ausführung sind in den Verbindungsstegen 8 in Figur 10 gezeigte Löcher 12 vorgesehen.

Wie aus Figur 10 hervorgeht, ist an der oberen Fläche 25 der Löcher 12 eine Abtropfkante 26 vorhanden. Die Abtropfkante 26 wird an der oberen Fläche 25 der Löcher 12 an einem Punkt gebildet, ab dem die Fläche 25 von ihrem horizontalen Verlauf wieder in einem nach oben hin in Richtung der oberen Auflagefläche 5 hin gerichteten Verlauf übergeht. Bei der in Figur 10 gezeigten Ausführung ist dies der Punkt, an dem die horizontale Fläche 25 an der Unterseite der Löcher 12 in die nach oben gekrümmte Fläche 27 an der Innenseite des oberen Auflagebereichs 4 übergeht. An diesem Punkt können sich die an der Oberseite des Auflagebereichs 4 und an der oberen Fläche 25 der Löcher 12 entlang gleitenden Flüssigkeiten nicht mehr halten und tropfen nach unten ab.

Zweckmäßigerweise ist die Abtropfkante 26 an der oberen Fläche 25 der Löcher 12 gegenüber der Innenkante 21 an einer unteren Fläche 28 der Durchlässe 11 um einen Versatz y nach außen versetzt. Dadurch kann sichergestellt werden, dass die antropfende Flüssigkeit nicht durch die Löcher 12 nach innen, sondern nach außen zu oberen Auffangflächen 29 der Auffangbereiche 6 gelangt.

Die Abtropfkante 26 muss nicht notwendigerweise an dem Übergang von der horizontalen unteren Fläche 25 zur nach oben gekrümmten Fläche 27 an der Innenseite des oberen Auflagebereichs 4 angeordnet sein. Sie kann z.B. auch an der Außenseite einer Nut 30 an der Fläche 25 gebildet sein, wie dies an dem rechten Loch 12 der Figur 11 gezeigt ist. Sie kann aber auch an einer Wulst 31 gebildet sein, wie dies an dem linken Loch 12 der Figur 11 dargestellt ist.

## Patentansprüche

1. Grillrost mit einem aus einem formstabilen Metallprofil bestehenden Auflageteil (1), das mehrere voneinander beabstandete Auflagebereiche (4) mit einer Auflagefläche (5) für das Grillgut, mehrere voneinander beabstandete Auffangbereiche (6) für abtropfende Flüssigkeit und unter einem Winkel zu den Auflageflächen (5) verlaufende, voneinander beabstandete Verbindungsstege (8) zwischen den Auflagebereichen (4) und den Auffangbereichen (6) enthält, **dadurch gekennzeichnet, dass** in den Verbindungsstegen (8) mindestens ein durch benachbarte Verbindungsstege (8) durchgängig verlaufender Durchlass (11) angeordnet ist.

2. Grillrost nach Anspruch 1, **dadurch gekennzeichnet, dass** der mindestens eine Durchlass (11) durch miteinander fluchtende Löcher (12) in benachbarten Verbindungsstegen (8) gebildet wird.

3. Grillrost nach Anspruch 2, **dadurch gekennzeichnet, dass** die miteinander fluchtenden Löcher (12) in die Verbindungsstege (8) eingefräst sind.

4. Grillrost nach einem der Ansprüche 1 bis 3, **dadurch gekennzeichnet, dass** in den Verbindungsstegen (8) mehrere voneinander beabstandete Durchgänge (11) angeordnet sind.

5. Grillrost nach einem der Ansprüche 1 bis 4, **dadurch gekennzeichnet, dass** das Auflageteil (1) wellenförmig ausgebildet ist.

6. Grillrost nach einem der Ansprüche 1 bis 5, **dadurch gekennzeichnet, dass** das Auflageteil (1) unterschiedlich gestaltete obere und untere Auflageflächen (5, 7) enthält.

7. Grillrost nach einem der Ansprüche 1 bis 6, **dadurch gekennzeichnet, dass** das Auflageteil (1) mit einer Beschichtung versehen ist.

8. Grillrost nach einem der Ansprüche 1 bis 7, **dadurch gekennzeichnet, dass** das Auflageteil (1) aus mehreren miteinander verbindbaren Abschnitten (3) besteht.

9. Grillrost nach Anspruch 8, **dadurch gekennzeichnet, dass** an den freien Enden der beiden äußeren Verbindungsstege (8) eines Abschnitts (3) miteinander korrespondierende Verbindungselemente (15, 16) zur lösbaren Verbindung mehrerer Abschnitte (3) angeordnet sind.

10. Grillrost nach Anspruch 9 **dadurch gekennzeichnet, dass** das eine Verbindungselement (15) als nach oben vorstehender Verbindungssteg mit einem im Querschnitt runden Außenprofil (17) und das andere Verbindungselement (16) als nach unten offene Aufnahmenut mit einer an den Querschnitt des ersten Verbindungselements (15) angepassten runden Innenkontur (18) ausgebildet ist.

11. Grillrost nach Anspruch 10 **dadurch gekennzeichnet, dass** an dem Außenprofil (17) des Verbindungselements (15) eine Abschrägung (19) vorgesehen ist.

12. Grillrost nach einem der Ansprüche 1 bis 11, **dadurch gekennzeichnet, dass** das Auflageteil auf zwei zueinander parallelen Seitenprofilen (2) angeordnet ist.

13. Grillrost nach Anspruch 12, **dadurch gekennzeichnet, dass** die Seitenprofile (2) als Rinnen- oder Ablaufprofile ausgebildet sind.

14. Grillrost nach einem der Ansprüche 1 bis 13, **dadurch gekennzeichnet, dass** eine Innenkante (21) des Auffangbereichs (6) gegenüber einer Außenkante (22) des Auflagebereichs (4) um einen Versatz x nach innen versetzt ist.

15. Grillrost nach Anspruch 14, **dadurch gekennzeichnet, dass** der Versatz x mindestens 1mm beträgt.

16. Grillrost nach einem der Ansprüche 2 bis 15, **dadurch gekennzeichnet, dass** an einer oberen Fläche (25) der Löcher (12) eine Abtropfkante (26) angeordnet ist, die gegenüber einer Innenkante (21) an einer unteren Fläche (28) der Löcher (12) um einen Versatz y nach außen versetzt ist.
